# FASCICULE DE BREVET EUROPEEN

(11) **EP 4 046 129 B1**
(45) Date de publication et mention de la délivrance du brevet: **04.10.2023**
(21) Numéro de dépôt: 20768702.1
(22) Date de dépôt: 14.08.2020
(51) Int. Cl.: G06T 7/00

(54) **PROCÉDÉ DE FABRICATION**
HERSTELLUNGSVERFAHREN
MANUFACTURING METHOD

(30) Priorité: 15.10.2019 EP 19203285
(43) Date de publication de la demande: 24.08.2022
(73) Titulaire: Aisapack Holding SA, 1896 Vouvry (CH)
(72) Inventeur: THOMASSET, Jacques, 74500 Neuvecelle (FR); GEX-COLLET, Yan, 1871 Choëx (CH); BUSSIEN, Gaël, 1897 Le Bouveret (CH); BENTO RAIMUNDO, Filipe, 1032 Romanel-sur-Lausanne (CH); FLEURET, François, 1400 Yverdon-les-Bains (CH); LEPOITTEVIN, Yann, 1005 Lausanne (CH); MONAY, Florent, 1870 Monthey (CH); KAYAL, Salim, 1800 Vevey (CH)
(74) Mandataire: Grosfillier, Philippe
(86) Numéro de dépôt international: PCT/IB2020/057678
(87) Numéro de publication internationale: WO 2021/074708

(56) Documents cités:
- WANG JINJIANG ET AL: "Deep learning for smart manufacturing: Methods and applications", JOURNAL OF MANUFACTURING SYSTEMS, SOCIETY OF MANUFACTURING ENGINEERS, DEARBORN, MI, US, vol. 48, 8 janvier 2018 (2018-01-08), pages 144-156, XP085479438, ISSN: 0278-6125, DOI: 10.1016/J.JMSY.2018.01.003
- MEHMOOD KHAN ET AL: "An integrated supply chain model with errors in quality inspection and learning in production", OMEGA., vol. 42, no. 1, 1 janvier 2014 (2014-01-01), pages 16-24, XP055685786, GB ISSN: 0305-0483, DOI: 10.1016/j.omega.2013.02.002
- WANG TIAN ET AL: "A fast and robust convolutional neural network-based defect detection model in product quality control", THE INTERNATIONAL JOURNAL OF ADVANCED MANUFACTURING TECHNOLOGY, SPRINGER, LONDON, vol. 94, no. 9, 15 août 2017 (2017-08-15), pages 3465-3471, XP036432221, ISSN: 0268-3768, DOI: 10.1007/S00170-017-0882-0 [extrait le 2017-08-15]
- JUN SUN ET AL: "An adaptable automated visual inspection scheme through online learning", THE INTERNATIONAL JOURNAL OF ADVANCED MANUFACTURING TECHNOLOGY, SPRINGER, BERLIN, DE, vol. 59, no. 5 - 8, 28 juillet 2011 (2011-07-28), pages 655-667, XP035024490, ISSN: 1433-3015, DOI: 10.1007/S00170-011-3524-Y

## Description

### Domaine de l'invention

L'invention se situe dans le domaine des objets fabriqués en série et nécessitant un contrôle visuel minutieux en cours de fabrication. L'invention s'applique plus particulièrement aux procédés de fabrication d'objets à grande cadence nécessitant un contrôle visuel intégré dans la ligne de fabrication.

### Etat de la technique

Des systèmes et des méthodes d'apprentissage et d'analyse d'images sont connus dans l'état de la technique. Des exemples sont donnés dans les publications suivantes: WO 2018/112514, WO 2018/200866, WO 2011/115666, WO 2012/164562 et WO 2017/052592, WANG JINJIANG ET AL. "Deep learning for smart manufacturing: Methods and applications" JOURNAL OF MANUFACTURING SYSTEMS, SOCIETY OF MANUFACTURING ENGINEERS, DEARBORN, MI, US, vol.48, 8 janvier 2018 (2018-01-08), pages 144-156, MEHMOOD KHAN ET AL.: "An integrated supply chain model with errors in quality inspection and learning in production", OMEGA., vol.42, no.1, 1 janvier 2014 (2014-01-01), pages 16-24, WANG TIAN ET AL: "A fast and robust convolutional neural network-based defect détection model in product quality control", THE INTERNATIONAL JOURNAL OF ADVANCED MANUFACTURING TECHNOLOGY, SPRINGER, LONDON, vol.94, no.9, 15 août 2017 (2017-08-15), pages 3465-3471, JUN SUN ET AL: "An adaptable automated visual inspection scheme through online learning", THE INTERNATIONAL JOURNAL OF ADVANCED MANUFACTURING TECHNOLOGY, SPRINGER, BERLIN, DE, vol.59, no.5-8, 28 juillet 2011 (2011-07-28), pages 655-667.

### Objectif, contraintes et problèmes à résoudre

La présente invention a pour but de définir des critères objectifs de quantification de l'esthétique d'objets, comme des tubes, en production. Aujourd'hui cette quantification repose sur l'appréciation humaine et elle est très difficile. Les objets produits sont tous différents de sorte que la notion de défaut est relative et il est nécessaire de définir ce qui est un défaut acceptable ou non par rapport à des objets produits et non de façon absolue.

Selon la présente invention, une phase d'apprentissage permet de définir une "norme" de ce qui est acceptable pour des objets produits. Dans l'invention, la notion de "défaut acceptable ou non-acceptable", c'est-à-dire d'objet considéré comme "bon" ou "défectueux" se définit par rapport à un certain niveau d'écart par rapport à la norme prédéfinie lors de l'apprentissage. L'invention permet de garantir un niveau de qualité constant dans le temps. De plus, on peut réutiliser des recettes, c'est-à-dire des normes qui ont déjà établies antérieurement, pour des productions ultérieures du même objet.

Le niveau de qualité peut être ajusté dans le temps en fonction des différences observées par un apprentissage itératif: lors de la production, la norme définie par l'apprentissage initial est affinée par un apprentissage "supplémentaire" qui tient compte des objets produits dans la phase de production normale mais qui présentent des défauts considérés comme acceptables. En conséquence, il est nécessaire d'adapter la norme afin qu'elle intègre cette information et que le processus ne rejette pas ces objets.

L'invention permet de contrôler les objets dans un temps très réduit et pour obtenir ces performances, elle fait appel à un modèle de compression-décompression d'images des objets comme décrit en détail dans la présente demande.

Dans le cadre de la présente invention, les contraintes posées et les problèmes à résoudre sont notamment les suivants:
- Le contrôle visuel se fait pendant la fabrication de l'objet, le temps de contrôle est par conséquent réduit car il ne doit pas ralentir la cadence de production, ou au maximum avoir un faible impact sur celle-ci
- Les défauts esthétiques ne sont pas connus (pas de bibliothèque de défaut)
- Les défauts esthétiques varient en fonction du décor
- Le niveau d'acceptation des défauts doit être ajustable.

La méthode proposée dans l'invention décrite ci-dessous permet de palier les inconvénients précités et surmonter les problèmes identifiés.

### Définitions

- Objet: objet en cours de fabrication sur une ligne industrielle
- N: nombre d'objets formant un lot de la phase d'apprentissage. N correspond aussi au nombre d'images secondaires formant un lot
- Image primaire : image prise de l'objet ou d'une partie de l'objet
- K: nombre d'images primaires par objet
- Aₖ: image primaire d'indice k avec 1≤ k ≤K
- Image secondaire : partie de l'image primaire
- Pₖ: nombre d'image secondaire par image primaire AₖS_{k,p} : Image secondaire d'indice k associée à l'image primaire Aₖ et d'indice p avec 1≤ p ≤Pₖ
- Modèle F_{k,p}: modèle de compression - décompression associé à l'image secondaire S_{k,p}
- Facteur de compression Q_{k,p}: facteur de compression du modèle F_{k,p}
- Image secondaire reconstruite R_{k,p}: Image secondaire reconstruite de l'image secondaire S_{k,p} avec le modèle F_{k,p} associé.

### Exposé général de l'invention

L'invention porte sur un procédé de fabrication d'objets, comme par exemple des emballages tels que des tubes, comportant un contrôle visuel intégré à une ou plusieurs étapes du procédé de production desdits objets. Le procédé de fabrication selon l'invention comprend aux moins deux phases pour réaliser le contrôle visuel:
- Une phase d'apprentissage pendant laquelle un lot d'objets jugés "de bonne qualité" sont produits et à l'issue de laquelle des critères sont définis à partir des images desdits objets.
- Une phase de production pendant laquelle l'image des objets en cours de production et les critères définis pendant la phase d'apprentissage sont utilisés pour quantifier en temps réel la qualité des objets en cours de production et pour piloter le procédé de production.

Pendant la phase d'apprentissage, la machine produit un nombre N d'objets jugés de qualité acceptable. Une (K=1) ou plusieurs images distinctes (K>1) dite(s) image(s) primaire(s) de chaque objet est(sont) collectée(s) au cours du procédé de production desdits objets. Les KxN images primaires collectées subissent un traitement numérique qui sera décrit plus en détail ci-dessous, et qui comprend au moins les étapes suivantes :
- Repositionnement de chaque image primaire Aₖ
- Division de chaque image primaire Aₖ en Pₖ images secondaires notées S_{k,p} avec 1≤ k ≤K et 1≤ p ≤ Pₖ
- Regroupement des images secondaires en lots de N images similaires.
- Pour chaque lot d'image secondaire S_{k,p} :
   o Recherche d'une représentation compressée F_{k,p} de facteur de compression Q_{k,p},
   o A partir de chaque lot d'image secondaire, on en déduit ainsi un modèle F_{k,p} de compression - décompression avec un facteur de compression Q_{k,p}. Un cas particulier de l'invention consiste à avoir le même facteur de compression pour tous les modèles F_{k,p}. L'ajustement du taux de compression Q_{k,p} à chaque modèle F_{k,p} permet d'ajuster le niveau de détection des défauts et d'optimiser le temps de calcul en fonction de la zone observée de l'objet.

A la fin de la phase d'apprentissage, on dispose donc d'un modèle F_{k,p} et d'un facteur de compression Q_{k,p} par zone observée de l'objet; chaque zone étant définie par une image secondaire S_{k,p}.

Comme il sera expliqué plus en détail ci-après, chaque image secondaire de l'objet a ses propres dimensions. Un cas particulier de l'invention consiste à avoir toutes les images secondaires de taille identique. Dans certains cas, il est avantageux de pouvoir diminuer localement la taille des images secondaires afin de détecter défauts de plus petite dimension. En ajustant conjointement la taille de chaque image secondaire S_{k,p} et du facteur de compression Q_{k,p}, l'invention permet d'optimiser le temps de calcul tout en gardant un niveau de détection performant et ajusté au niveau d'exigence liée au produit fabriqué. L'invention permet d'adapter localement le niveau de détection au niveau de criticité de la zone observée.

Pendant la phase de production, K images dites "primaires" de chaque objet sont utilisées pour contrôler en temps réel la qualité de l'objet en cours de production, ce qui permet de retirer au plus tôt de la production les éventuels objets défectueux et/ou de régler le procédé ou les machines lorsque des dérives sont observées.

Pour réaliser le contrôle en temps réel de l'objet en cours de production, les K images primaires dudit objet sont évaluées via une méthode décrite dans la présente demande par rapport au groupe d'images primaires acquises pendant la phase d'apprentissage dont on extrait des fonctions de compression - décompression et des facteurs de compression qui sont appliqués aux images dudit objet en cours de production. Cette comparaison entre des images acquises pendant la phase de production et des images acquises pendant la phase d'apprentissage donne lieu à la détermination d'un ou plusieurs scores par objet, dont les valeurs permettent de classer les objets par rapport à des seuils correspondant à des niveaux de qualité visuels. Grâce à la valeur des scores et aux seuils prédéfinis, les objets défectueux peuvent être écartés du procédé de production. D'autres seuils peuvent être utilisés pour détecter des dérives du procédé de fabrication, et permettre la correction du procédé ou une intervention sur l'outil de production avant la formation d'objets défectueux.

Une partie de l'invention réside dans le calcul des scores qui permet grâce à une ou plusieurs valeurs numériques de quantifier la qualité visuelle des objets en production. Le calcul des scores de chaque objet en production requiert les opérations suivantes:
- Acquisition des images primaires Aₖ de l'objet en production
- Repositionnement de chaque image primaire par rapport à l'image de référence respective
- Division des K images primaires en images secondaires S_{k,p} en utilisant la même décomposition que celle réalisée pendant la phase d'apprentissage.
- Calcul de l'image reconstruite R_{k,p} de chaque image secondaire S_{k,p} en utilisant le modèle F_{k,p} et le facteur Q_{k,p} définis pendant la phase d'apprentissage
- Calcul de l'erreur de reconstruction de chaque image secondaire en comparant l'image secondaire S_{k,p} et l'image secondaire reconstruite R_{k,p}. Avec l'ensemble des images secondaires de l'objet, on obtient donc l'ensemble des erreurs de reconstruction.
- Les scores de l'objet sont calculés à partir des erreurs de reconstruction

L'utilisation du modèle numérique F_{k,p} à facteur de compression Q_{k,p} permet de réduire fortement le temps de calcul et permet, in fine, de contrôler la qualité de l'objet au cours du procédé de fabrication et piloter le procédé. La méthode est particulièrement adaptée aux procédés de fabrication d'objets à grande cadence de production.

L'invention est avantageusement utilisée dans le domaine de l'emballage pour contrôler par exemple la qualité d'emballages destinés aux produits cosmétiques. L'invention est particulièrement avantageuse par exemple pour fabriquer des tubes cosmétiques ou des flacons.

L'invention peut être utilisée dans un procédé de fabrication en continu. C'est le cas par exemple du procédé de fabrication de tubes d'emballage dans lequel une feuille multicouche est soudée en continu pour former le corps tubulaire. Il est d'un grand avantage de contrôler en continu l'esthétique des corps de tubes fabriqués et en particulier de la zone la zone de soudure.

L'invention peut être utilisée dans un procédé de fabrication discontinu. C'est le cas par exemple de la fabrication de produits dans des dispositif indexés. C'est par exemple un procédé d'assemblage par soudage d'une tête de tube sur un corps de tube. L'invention est particulièrement avantageuse pour contrôler dans le procédé d'assemblage la qualité visuelle de la zone soudée entre le corps de tube et la tête de tube.

L'invention cible principalement les procédés de fabrication d'objet dans des lignes de production automatisées. L'invention est particulièrement adaptée à la fabrication d'objet à grand cadence de production comme les objets produits dans le secteur de l'emballage ou tout autre secteur ayant des cadences de production élevées.

Selon l'invention, une bibliothèque de défaut permettant de définir leur localisation, ou leur géométrie, ou leur couleur n'est pas nécessaire. Les défauts sont détectés automatiquement pendant la production une fois que la procédure d'apprentissage a été exécutée.

Dans un mode d'exécution, le procédé de fabrication d'objets, comme des tubes ou des emballages, comprend au moins un contrôle de qualité intégré dans le procédé de fabrication effectué en cours de production et en continu, le contrôle de qualité comprenant une phase d'apprentissage et une phase de production. La phase d'apprentissage comprend au moins les étapes suivantes:
-) production de N objets considérés comme étant acceptables;
-) prise d'au moins une image primaire (Aₖ) de référence de chacun des N objets;
-) division de chaque image primaire (Aₖ) de référence en (Pₖ) images secondaires (S_{k,p}) de référence;
-) regroupement des images secondaires de référence correspondantes en lots de N images;
-) détermination d'un modèle (F_{k,p}) de compression - décompression et avec un facteur de compression (Q_{k,p}) par lot.

La phase de production comprend au moins les étapes suivantes:
-) prise d'au moins une image primaire d'au moins un objet en production;
-) division de chaque image primaire en images secondaires (S_{k,p});
-) application du modèle de compression - décompression et du facteur de compression définis lors de la phase d'apprentissage à chaque image secondaire (S_{k,p}) pour former une image secondaire reconstruite (R_{k,p});
-) calcul de l'erreur de reconstruction de chaque image secondaire reconstruite R_{k,p};
-) attribution d'un ou plusieurs scores par objet sur la base des erreurs de reconstruction;
-) détermination si l'objet produit passe avec succès le contrôle de qualité ou non sur la base du ou des score(s) attribué(s).

Dans des modes d'exécution, après l'étape de prise d'au moins une image primaire (dans la phase d'apprentissage et/ou de production), chaque image primaire est repositionnée.

Dans des modes d'exécution, chaque image primaire est traitée par exemple numériquement. Le traitement peut par exemple faire appel à un filtre numérique (comme le flou gaussien) et/ou la détection de contours ("edge détection"), et/ou l'application de masques pour cacher certaines zones de l'image comme par exemple l'arrière-plan ou des zones sans intérêt.

Dans d'autres modes d'exécution, on exécute une analyse multiple sur une ou sur plusieurs images primaires. L'analyse multiple consiste à appliquer sur la même image primaire plusieurs traitements simultanément. Ainsi une image primaire "mère" pourra donner lieu à plusieurs image images primaires "filles" en fonction du nombre d'analyse exécutées. Par exemple, une image primaire "mère" peut faire l'objet d'un premier traitement avec un filtre gaussien donnant lieu à une première image primaire "fille", et d'un second traitement avec un filtre Sobel donnant lieu à une seconde image primaire "fille". Les deux images primaires "filles" subissent le même traitement numérique défini dans l'invention pour les images primaires. Ainsi à chaque image primaire "fille" pourra être associé un ou plusieurs scores. De plus, parmi les images primaires initialement prises (en phase d'apprentissage et en phase de production), on peut décider d'appliquer une analyse multiple à toutes les images primaires, ou seulement à une partie d'entre elles (voire uniquement sur une image primaire). Ensuite toutes les images primaires (les image "filles" qui sont issues de l'analyse multiple et les autres auxquelles l'analyse multiple n'a pas été appliquée) sont traitées avec le procédé selon l'invention.

L'analyse multiple est intéressante lorsque des défauts très différents sont recherchés sur les objets. Ainsi l'analyse multiple permet d'adapter l'analyse des images au défaut recherché. Cette méthode permet une finesse de détection plus élevée pour chaque type de défaut.

Dans des modes d'exécution, le facteur de compression est compris entre 5 et 500'000, de préférence entre 100 et 10'000.

Dans des modes d'exécution, la fonction de compression - décompression peut être déterminée à partir d'une analyse en composantes principales ("PCA").

Dans des modes d'exécution, la fonction de compression - décompression peut être déterminée par un auto-encodeur.

Dans des modes d'exécution, la fonction de compression - décompression peut être déterminée par l'algorithme dit "OMP" (Orthogonal Matching pursuit).

Dans des modes d'exécution, l'erreur de reconstruction peut être calculée par la distance euclidienne et/ou la distance de Minkovsky et/ou la méthode de Tchebichev.

Dans des modes d'exécution, le score peut correspondre à la valeur maximale des erreurs de reconstruction et/ou à la moyenne des erreurs de reconstruction et/ou à la moyenne pondérée des erreurs de reconstruction et/ou à la distance euclidienne et/ou la p-distance et/ou la distance de Tchebichev.

Dans des modes d'exécution, N peut être égal à au moins 10.

Dans des modes d'exécution, on prend au moins deux images primaires, les images primaires étant de taille identique ou de taille différente.

Dans des modes d'exécution, la division de chaque image primaire peut se faire en P images secondaires de taille identique ou de taille différente.

Dans des modes d'exécution, les images secondaires S peuvent être juxtaposées avec recouvrement ou sans recouvrement.

Dans des modes d'exécution, certaines images secondaires peuvent être juxtaposées avec recouvrement et d'autres images secondaires sont juxtaposées sans recouvrement.

Dans des modes d'exécution, les images secondaires peuvent être de taille identique ou de taille différente.

Dans des modes d'exécution, le contrôle de qualité intégré peut être effectué au moins une fois dans le procédé de fabrication.

Dans des modes d'exécution, la phase d'apprentissage peut être itérative et répétée en cours de production avec des objets en production afin de tenir compte d'une différence qui n'est pas considérée comme un défaut.

Dans des modes d'exécution, le repositionnement peut être de considérer un nombre prédéterminé de points d'intérêt et de descripteurs répartis sur l'image et à déterminer le déplacement relatif entre l'image de référence et l'image primaire qui minimise l'erreur de superposition au niveau des points d'intérêt.

Dans des modes d'exécution, les points d'intérêt peuvent être répartis de manière aléatoire dans l'image ou dans une zone prédéfinie de l'image.

Dans des modes d'exécution, la position des points d'intérêt peut être prédéfinie, arbitrairement ou non.

Dans des modes d'exécution, les points d'intérêt peuvent détectés par l'une des méthodes dites "SIFT", ou "SURF", ou "FAST", ou "ORB" ; et les descripteurs définis par l'une des méthodes "SIFT", ou "SURF", ou "BRIEF", ou "ORB".

Dans des modes d'exécution, l'image peut être repositionnée selon au moins un axe et/ou l'image peut être repositionnée en rotation autour de l'axe perpendiculaire au plan formé par l'image et/ou l'image peut être repositionnée par la combinaison d'un mouvement de translation et de rotation.

### Exposition détaillée de l'invention

Les figures 1 à 7 sont utilisées pour illustrer l'invention.
- La figure 1 est un exemple d'objet en cours de fabrication
- La figure 2 montre les images primaires prises pendant la phase d'apprentissage
- La figure 3 illustre le découpage des images primaires en images secondaires
- La figure 4 représente la phase d'apprentissage, et en particulier la formation de lots d'images secondaires pour obtenir in fine un modèle de compression-décompression par lot
- La figure 5 illustre l'utilisation du modèle de compression-décompression en phase de production
- La figure 6 décrit sous forme de schéma bloc les principales étapes de la phase d'apprentissage
- La figure 7 décrit sous forme de schéma bloc les principales étapes de la phase de production

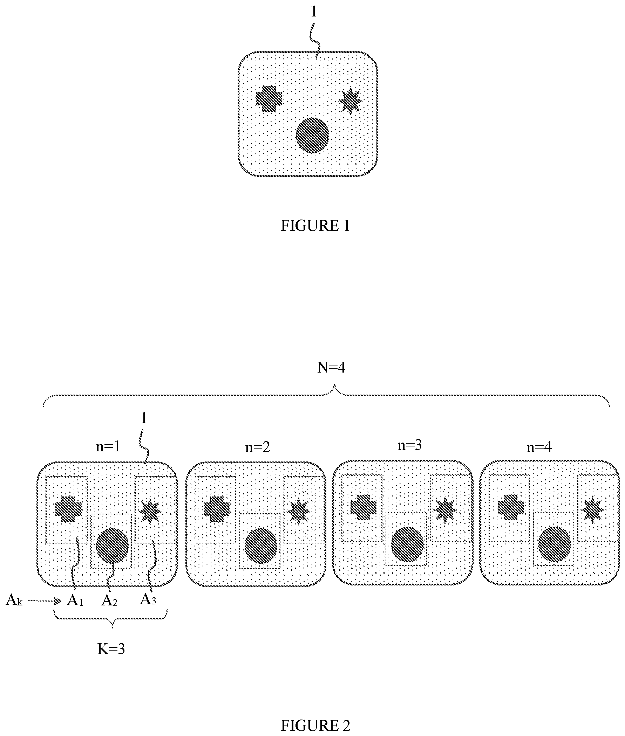

La figure 1 illustre un objet 1 en cours de fabrication. Afin d'illustrer l'invention et faciliter la compréhension de l'invention, trois motifs décoratifs ont été représentés sur l'objet comme exemple non-limitatif. L'invention permet le contrôle de la qualité de ces motifs sur les objets en cours de production. L'invention permet de contrôler tout type d'objet ou partie d'objet. Les objets peuvent être considérés comme des pièces unitaires selon l'exemple présenté figure 1. Dans d'autres procédés, comme la fabrication de tube par soudage d'un laminé imprimé que l'on déroule et forme dans un procédé continu; l'objet est défini par la dimension du motif décoratif répétitif sur le tube en formation. Dans un autre cas de figure où il serait compliqué de définir la taille de l'objet, comme par exemple un procédé d'extrusion en continu d'une feuille ou d'un tube, l'objet peut être défini arbitrairement par la dimension de l'image prise à intervalle régulier du produit extrudé.

La figure 2 illustre un exemple d'images primaires de l'objet prises pendant la phase d'apprentissage. Pendant cette phase d'apprentissage, N objets jugés de qualité acceptable sont produits. Pour faciliter l'illustration de l'invention, seuls 4 objets ont été représentés dans la figure 2 à titre d'exemple. Pour obtenir un modèle robuste, le nombre d'objet nécessaire pendant la phase d'apprentissage doit être supérieur à 10 (soit N>10) et de préférence supérieur à 50 (soit N>50). Bien entendu, ces valeurs sont des exemples non-limitatifs et N peut être inférieur ou égal à 10. La figure 2 montre les 3 images primaires A₁, A₂ et A₃ représentant respectivement des motifs distincts imprimés sur l'objet. Dans l'exposé de l'invention, on désigne par Aₖ les images primaires de l'objet, l'indice k de l'image variant entre 1 et K; et K correspondant au nombre d'image par objet.

Comme il est illustré en figure 2, la taille des images primaires Aₖ n'est pas forcément identique. Sur la figure 2, l'image primaire A₂ est de plus petite dimension que les images primaires A₁ et A₃. Cela permet par exemple d'avoir une image A₂ avec une meilleure définition (plus grand nombre de pixel). Les images primaires peuvent couvrir toute la surface de l'objet 1 ou au contraire ne couvrir que partiellement sa surface.

Comme illustré figure 2, les images primaires Aₖ ciblent des zones particulières de l'objet. Cette flexibilité de l'invention tant au niveau de la taille, que de la position et du nombre d'images primaires permet d'optimiser le temps de calcul tout en conservant une grande précision de contrôle de la qualité visuelle dans les zones les plus critiques.

La figure 2 illustre également la nécessité de produire des images A₁ similaires d'un objet à l'autre. Cela nécessite la mise en place de moyens appropriés pour positionner de façon répétitive l'objet ou la caméra lors de la prise des images Aₖ. Comme, il sera expliqué dans la suite de l'exposé de l'invention, malgré les moyens mis en oeuvre pour être répétitif d'une image à l'autre, il est souvent nécessaire de procéder à un repositionnement des images primaires par rapport à une image de référence pour s'affranchir des variations inhérentes à la prise d'image dans un procédé de fabrication industriel ainsi qu'aux variations inhérentes aux objets produits. Le repositionnement des images est réalisé avec une grande précision, car ce sont des éléments de petite taille de l'image comme par exemple les pixels qui sont utilisés pour effectuer ce repositionnement.

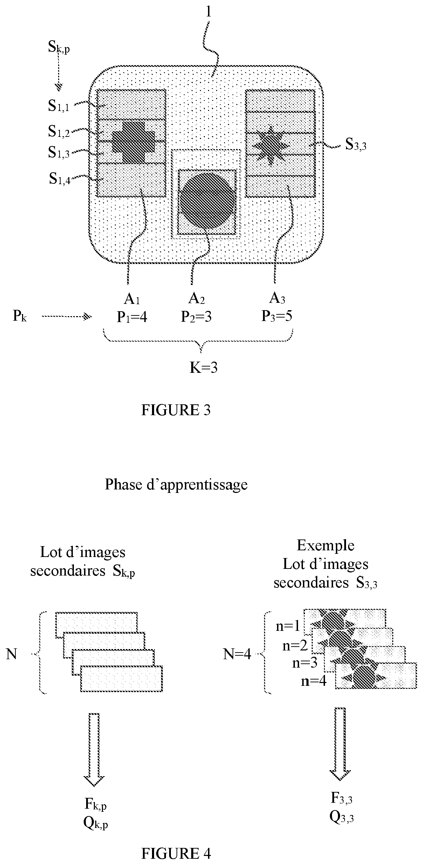

La figure 3 montre le découpage des images primaires en images secondaires. Ainsi, comme l'illustre la figure 3, l'image primaire A₁ est découpée en 4 images secondaires S_{1,1}, S_{1,2}, S_{1,4} et S_{1,4}. Ainsi chaque image primaire Aₖ est décomposée en Pₖ images secondaires S_{k,p} avec l'indice de découpage p qui varie entre 1 et Pₖ.

Comme il est illustré en figure 3, la taille des images secondaires n'est pas forcément identique. A titre d'exemple, la figure 3 montre que les images secondaires S_{1,2} et S_{1,3} sont de plus petite dimension que les images secondaires S_{1,1} et S_{1,4}. Cela permet d'avoir une recherche de défaut plus précise dans les images secondaires S_{1,2} et S_{1,3}.

Comme le montre également la figure 3, les images secondaires ne couvrent pas forcément l'ensemble de l'image primaire Aₖ. A titre d'exemple, les images secondaires S_{2,p} ne couvrent que partiellement l'image primaire A₂. En réduisant, la taille des images secondaire, on concentre l'analyse dans une zone précise de l'objet. Seules les zone de l'objet couvertes par les images secondaires sont analysées.

La figure 3 illustre le fait que l'invention permet d'ajuster localement le niveau de contrôle de l'esthétique de l'objet en ajustant le nombre, la taille et la position des images secondaires S_{k,p}.

La figure 4 illustre la phase d'apprentissage, et en particulier la formation de lots d'images secondaires pour obtenir in fine un modèle de compression-décompression à facteur de compression par lot.

La figure 4 montre le regroupement des N images secondaires S_{k,p} similaires pour former un lot. Chaque lot est traité séparément et est utilisé pour créer un modèle F_{k,p} de compression-décompression à facteur de compression Q_{k,p}. Ainsi à titre d'exemple et tel qu'illustré figure 3, les N=4 images secondaires S_{3,3} sont utilisées pour créer le modèle F_{3,3} de facteur de compression Q_{3,3}.

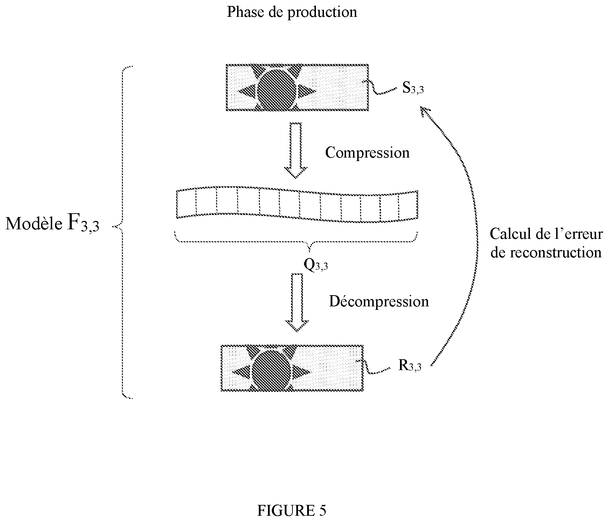

La figure 5 illustre l'utilisation du modèle de compression-décompression découlant de la phase d'apprentissage en phase de production. En phase de production, chaque modèle F_{k,p} déterminé lors de la phase d'apprentissage est utilisé pour calculer l'image reconstruite de chaque image secondaire S_{k,p} de l'objet en cours de fabrication. Chaque image secondaire de l'objet subit donc une opération de compression-décompression avec un modèle et un facteur de compression différent issus de la phase d'apprentissage. Il résulte de chaque opération de compression-décompression une image reconstruite qui peut être comparée à l'image secondaire dont elle est issue. La comparaison de l'image secondaire S_{k,p} et son image reconstruite R_{k,p} permet de calculer une erreur de reconstruction qui sera utilisée pour définir un score.

La figure 5 illustre, à titre d'exemple illustratif, le cas particulier de l'obtention de l'image reconstruite R_{3,3} à partir de l'image secondaire S_{3,3} en utilisant le modèle F_{3,3} et son facteur de compression Q3,3.

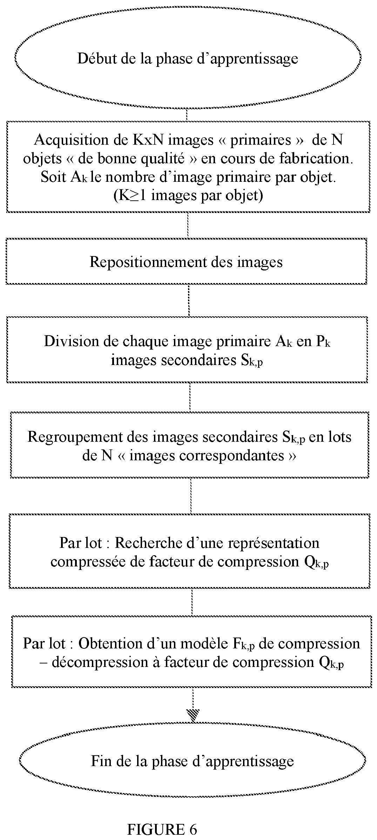

La figure 6 représente les principales étapes de la phase d'apprentissage selon la présente invention. Au début de la phase d'apprentissage, N d'objets jugés de qualité acceptable sont produits. Le jugement qualitatif et/ou quantitatif desdits objets peut être fait selon des procédures de contrôle visuels ou selon des méthodes et moyens définis par l'entreprise. Le nombre d'objets produits pour la phase d'apprentissage peut donc être égal à N ou supérieur à N. La phase d'apprentissage illustrée sur la figure 6 comprend au moins les étapes suivantes :
- Acquisition des KxN images dites "primaires" des objets jugés de bonne qualité pendant la fabrication desdits objets. Chaque objet peut être associé à une (K=1) ou plusieurs (K>1) images primaires distinctes selon les dimensions de la zone à analyser sur l'objet et de la taille des défauts que l'on souhaite détecter. Des conditions d'éclairage et de grossissement appropriées au contexte industriel sont mis en oeuvre pour permettre la prise de d'images dans un environnement lumineux relativement constant. Les techniques d'optimisation de l'éclairage connues peuvent être mises en oeuvre pour éviter les phénomènes de reflet ou les perturbations liées à l'environnement. De multiples solutions couramment utilisées peuvent être adoptées comme par exemple des tunnels ou boites noires qui permettent d'éviter les perturbations d'éclairage venant de l'extérieur, ou/et des lumières avec des longueurs d'onde spécifiques et/ou des éclairages en lumière rasante ou en éclairage indirect. Lorsque plusieurs images primaires sont prises sur un même objet (K>1), lesdites images primaires peuvent être espacées, juxtaposées ou encore se chevaucher. Le chevauchement des images primaires peut être utile lorsque l'on souhaite éviter de couper un éventuel défaut qui apparaitrait entre deux images, et/ou pour compenser la perte d'information sur le bord de l'image liée à l'étape de repositionnement des images. On peut également combiner ces façons de faire en fonction des images primaires et de l'information qui s'y trouve. L'image peut également être pré-traitée par l'intermédiaire de filtres optiques ou numériques afin d'augmenter par exemple le contraste.
- Ensuite les images primaires sont repositionnées par rapport à une image de référence. De façon générale, les images primaires de n'importe quel objet produit pendant la phase d'apprentissage peuvent servir d'images de référence. De préférence, les images primaires du premier objet produit pendant la phase d'apprentissage sont utilisées comme images de référence. Les méthodes de repositionnement de l'image primaire sont détaillées dans la suite de la description de la présente demande.
- Chaque image primaire Aₖ est ensuite divisée en Pₖ images dites "secondaires". La division de l'image peut résulter en une zone d'analyse plus réduite que l'image primaire. Une réduction de la zone d'analyse peut être intéressante lorsque l'on sait à priori dans quelle zone de l'objet chercher d'éventuels défauts. C'est le cas par exemple des objets fabriqués par soudage et pour lesquels on cherche les défauts liés à l'opération de soudage. Les images secondaires peuvent être espacées les unes des autres laissant entre elles des zones "non analysées". Ce cas de figure peut être utilisé par exemple lorsque les défauts apparaissent dans des zones ciblées, ou lorsque les défauts apparaissent de façon répétitive et continue. La réduction de la zone d'analyse permet de réduire les temps de calcul. Alternativement, les images secondaires peuvent se superposer. Le chevauchement des images secondaires permet d'éviter de couper un défaut en deux parties lorsque ledit défaut apparait à la jointure entre deux images secondaires. Le chevauchement des images secondaires est particulièrement utile lorsque des défauts de petite taille sont cherchés. Enfin, les images secondaires peuvent être juxtaposées sans espacement ni chevauchement. La division de l'image primaire peut se faire en images secondaires de tailles identiques ou variables et les façons de positionner relative les images secondaires (espacées, juxtaposées ou superposées) peuvent aussi se combiner en fonction des défauts recherchés.
- L'étape suivante consiste à regrouper les images secondaires correspondantes par lot. Les images secondaires obtenues à partir des KxN images primaires donne lieu à un ensemble d'images secondaires. A partir de cet ensemble d'images secondaires, on peut former des lots contenant N images secondaires correspondantes, à savoir la même image secondaire S_{k,p} de chaque objet. Ainsi, les N images secondaires S_{1,1} sont regroupées dans un lot. Il en est de même pour les N images S_{1,2}, puis pour les N images S_{1,3}, et ainsi de suite pour l'ensemble des images S_{k,p}.
- L'étape suivante consiste à rechercher une représentation compressée par lot d'images secondaires. Cette opération est une étape clé de l'invention. Elle consiste notamment à obtenir un modèle de compression-décompression F_{k,p} à facteur de compression Q_{k,p} qui caractérisent ledit lot. Les modèles F_{k,p} seront utilisés pour le contrôle de qualité des objets pendant la phase de production. Ainsi on obtient le modèle F_{1,1} de critère de compression Q_{1,1} pour le lot des images secondaires S_{1,1}. De même le modèle F_{1,2} est obtenu pour le lot d'images S_{1,2} ; puis le modèle F_{1,3} pour le lot d'images S_{1,3} ; et ainsi de suite un modèle F_{k,p} est obtenu pour chaque lot d'images S_{k,p}.
- Le choix du facteur de compression Q_{k,p} par lot d'image secondaire S_{k,p} dépend du temps de calcul à disposition et de la taille du défaut que l'on souhaite détecter.
- A la fin de la phase d'apprentissage, on dispose d'un ensemble de modèles F_{k,p} à facteur de compression Q_{k,p} qui sont associés à la qualité visuelle de l'objet en cours de production.

Selon l'invention, les résultats de la phase d'apprentissage qui sont les modèles F_{k,p} et les facteurs de compression Q_{k,p} peuvent être conservés comme une "recette" et réutilisés ultérieurement lors d'une nouvelle production des mêmes objets. Des objets de qualité identique peuvent ainsi être reproduits ultérieurement réutilisant la recette prédéfinie. Cela permet d'éviter également de refaire une phase d'apprentissage préalablement au démarrage de chaque production desdits mêmes objets.

Selon l'invention, il est possible d'avoir un apprentissage itératif en cours de production. Ainsi, en cours de production, il est possible par exemple d'effectuer un apprentissage additionnel (ou complémentaire) avec de nouveaux objets et d'ajouter les images de ces objets aux images des objets pris initialement en compte lors de la phase d'apprentissage. A partir du nouvel ensemble des images, une nouvelle phase d'apprentissage peut être effectuée. L'apprentissage évolutif est particulièrement adapté si une différence entre les objets apparait en cours de production et que cette différence n'est pas considérée comme un défaut. En d'autres termes, ces objets sont à considérés comme "bons" comme dans la phase d'apprentissage initiale et il est préférable d'en tenir compte. Dans ce cas de figure, un apprentissage itératif est nécessaire afin d'éviter un taux de rejet élevé qui comprendrait les objets présentant cette différence. L'apprentissage itératif peut être réalisé de nombreuses façons, soit par exemple en cumulant les nouvelles images avec les images préalablement apprises; soit en recommençant l'apprentissage avec les nouvelles images apprises; ou soit encore en ne conservant seulement que quelques images initiales avec les nouvelles images.

Selon l'invention, l'apprentissage itératif est déclenché par un indicateur lié au rejet des objets. Cet indicateur est par exemple le nombre de rejet par unité temporelle ou le nombre de rejet par quantité d'objet produit. Lorsque cet indicateur dépasse une valeur fixée, l'opérateur est alerté et décide si l'augmentation du taux de rejet nécessite un réglage machine (parce que les différences sont des défauts) ou un nouvel apprentissage (parce que les différences ne sont pas des défauts).

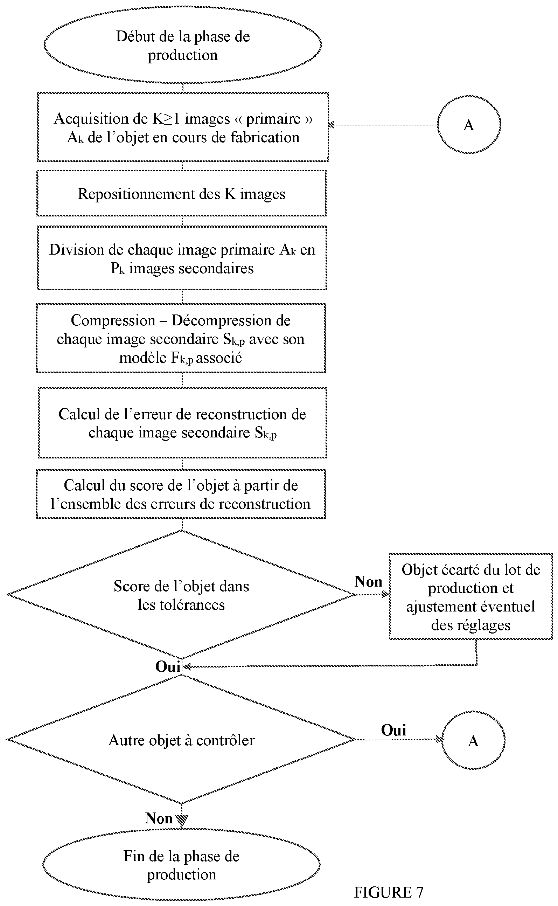

La figure 7 représente les principales étapes de la phase de production des objets. La phase de production commence après la phase d'apprentissage, c'est-à-dire quand les critères caractéristiques des objets "de qualité" acceptable ont été définis comme décrit ci-dessus. L'invention permet d'écarter en temps réel du lot de production les objets défectueux, et d'éviter la production de déchets trop important lorsqu'une dérive dans la qualité produite est observée. L'invention permet également de signaler en temps réel les dérives du procédé de production, et d'anticiper la production d'objets défectueux. En effet, on peut alors agir sur l'outil de production (comme les machines) pour corriger le processus de production et corriger les défauts détectés, ou corriger une dérive. La phase de production selon l'invention illustrée figure 7 comprend au moins les opérations suivantes :
- Acquisition de K images primaires de l'objet en cours de fabrication. Les images de l'objet sont prises de façon identique aux images prises dans la phase d'apprentissage : les zones photographiées, les conditions d'éclairage, de grossissement et de réglage sont identiques à celles utilisées pendant la phase de d'apprentissage.
- Les K images sont repositionnées par rapport aux images de référence. L'opération de repositionnement a pour but de s'affranchir des légers décalages entre les images que l'on souhaite comparer. Ces décalages peuvent être liés aux vibrations, ou encore au mouvement relatif entre les objets et les appareils de prise d'image.
- Chaque image primaire Aₖ de l'objet en production est ensuite divisée en Pₖ images secondaires. La division est effectuée de la même manière que la division des images réalisée dans la phase d'apprentissage. A l'issue de cette division, on obtient donc un ensemble d'images secondaires S_{k,p} par objet en production.
- Chaque image secondaire S_{k,p} est ensuite compressée-décompressée avec le modèle F_{k,p} à facteur de compression F_{k,p} prédéfini pendant la phase d'apprentissage. Cette opération donne lieu à une image reconstruite R_{k,p} pour chaque image secondaire S_{k,p}. Ainsi pour l'objet en cours de production objet, on obtient des images reconstruites qui peuvent être comparées aux images secondaires dudit objet. Du point de vue numérique, l'usage du terme "reconstruction de l'image secondaire" ne signifie pas forcément l'obtention d'une nouvelle image au sens strict du terme. L'objectif étant de comparer in fine l'image de l'objet en cours de production aux images obtenues lors de la phase d'apprentissage par le biais des fonctions de compression - décompression et des facteurs de compression, seule la quantification de la différence entre ces images étant strictement utile. Pour des raisons de temps de calcul, il peut être choisi de se limiter à un objet numérique représentatif de l'image reconstruite et suffisant pour quantifier la différence entre l'image secondaire et l'image reconstruite. L'utilisation modèle F_{k,p} est particulièrement avantageuse car elle permet d'effectuer cette comparaison dans des temps très réduits compatibles avec les exigences et les cadences de la production.
- A partir de la comparaison de l'image secondaire et l'image secondaire reconstruite, une erreur de reconstruction peut être calculée. La méthode préférentielle pour quantifier cette erreur est le calcul de l'erreur quadratique moyenne mais d'autres méthodes équivalentes sont possibles.
- Pour chaque objet, on dispose donc des images secondaires et des images reconstruites, et par conséquent des erreurs de reconstruction. A partir de cet ensemble d'erreurs de reconstruction, un ou plusieurs score(s) peut (peuvent) être défini(s) pour l'objet en cours de production. Plusieurs méthodes de calcul sont possibles pour calculer les scores de l'objet qui caractérise sa ressemblance ou différence par rapport au lot appris. Ainsi selon l'invention, un objet éloigné visuellement du lot d'apprentissage parce qu'il présente des défauts aura un ou plusieurs scores élevés. A contrario, un objet proche visuellement du lot d'apprentissage aura un ou plusieurs scores faibles et sera considéré de bonne qualité ou d'une qualité acceptable. Une méthode préférentielle de calcul du ou des scores de l'objet consiste à prendre la valeur maximale des erreurs de reconstruction. D'autres méthodes consistent à combiner les erreurs de reconstructions pour calculer la valeur du ou des scores de l'objet.
- L'étape suivante consiste à écarter du lot de production les objets défectueux. Si la valeur du ou des scores de l'objet est (sont) inférieure(s) à une ou des limite(s) prédéfinie(s), l'objet évalué répond aux critères de qualité visuels définis lors de la phase d'apprentissage, et l'objet est gardé dans le flux de production. A contrario, si la ou les valeurs du ou des scores de l'objet est (sont) supérieure(s) à ladite ou lesdites limite(s), l'objet est écarté du flux de production. Lorsque plusieurs objets consécutifs sont écartés du flux de production, ou lorsque le taux de rebuts devient important, des actions de corrections de procédé ou des interventions sur les machines de production peuvent être envisagées.

Les étapes de l'invention sont reprises et présentées de façon plus détaillée ci-dessous.

### Repositionnement de l'image primaire

La méthode de repositionnement de l'image selon l'invention comporte deux étapes :
- La recherche dans l'image de points d'intérêt et de descripteurs
- Le repositionnement de l'image prise par rapport à l'image de référence à partir des points d'intérêts et des descripteurs

Typiquement, l'image ou les images de référence est/sont définie(s) sur la première image prise lors de la phase d'apprentissage ou autre image, comme décrit dans la présente demande. La première étape consiste à définir sur l'image des points d'intérêt et des descripteurs associés aux points d'intérêt. Les points d'intérêt peuvent être par exemple des parties angulaires au niveau des formes présentes sur l'image, ils peuvent être encore des zones à fort contraste d'intensité ou de couleur ou encore les points d'intérêt peuvent être choisis aléatoirement. Les points d'intérêts identifiés sont ensuite caractérisés par des descripteurs qui définissent les caractéristiques de ces points d'intérêt.

De préférence les points d'intérêt sont déterminés de façon automatique grâce à un algorithme approprié; mais une méthode alternative consiste à prédéfinir arbitrairement la position des points d'intérêt.

Le nombre de points d'intérêt utilisé pour le repositionnement est variable et dépend du nombre de pixel par point d'intérêt. Le nombre total de pixel utilisé pour le positionnement est généralement compris entre 100 et 10'000 et de préférence entre 500 et 1000.

Une première méthode pour définir les points d'intérêt consiste à choisir ces points de manière aléatoire. Cela revient à définir aléatoirement un pourcentage de pixels appelés points d'intérêt, les descripteurs étant les caractéristiques desdits pixels (position, couleurs). Cette première méthode est particulièrement adaptée au contexte de production industrielle, surtout dans le cas des procédés de fabrication à grande cadence ou le temps disponible pour le calcul est très réduit.

Selon un premier mode de réalisation de la première méthode, les points d'intérêt sont répartis de manière aléatoire dans l'image.

Selon un second mode de réalisation de la première méthode, les points d'intérêt sont répartis aléatoirement dans une zone prédéfinie de l'image. Ce second mode est avantageux quand on sait à priori ou vont apparaitre les éventuels défauts. C'est le cas par exemple d'un procédé de soudage dans lequel les défauts sont attendus principalement au niveau de la zone affectée par l'opération de soudage. Dans ce cas de figure, il est avantageux de positionner les points d'intérêt en dehors de la zone affectée par l'opération de soudage.

Une seconde méthode pour définir les points d'intérêt est basée sur la méthode nommée "SIFT" ("Scale Invariant Feature Transform", voir la publication US 6,711,293) soit une méthode qui permet de conserver les mêmes caractéristiques visuelles de l'image indépendamment de l'échelle. Cette méthode consiste à calculer les descripteurs de l'image aux points d'intérêt de ladite image. Ces descripteurs correspondent à des informations numériques dérivées de l'analyse locale de l'image et qui caractérisent le contenu visuel de l'image indépendamment de l'échelle. Le principe de cette méthode consiste à détecter sur l'image des zones définies autour de points d'intérêt ; lesdites zones étant de préférence circulaires avec un rayon appelé facteur d'échelle. Dans chacune de ces zones, on cherche les formes et leurs contours, puis on définit les orientions locales des contours. Numériquement ces orientations locales se traduisent par un vecteur qui constitue le descripteur "SIFT" du point d'intérêt.

Une troisième méthode pour définir les points d'intérêt est basée sur la méthode "SURF" ("Speeded Up Robust Features", voir la publication US 2009/0238460) soit une méthode accélérée pour définir les points d'intérêt et les descripteurs. Cette méthode est similaire à la méthode "SIFT" mais présente l'avantage de la rapidité d'exécution. Cette méthode comporte comme "SIFT" une étape d'extraction des points d'intérêt et de calcul des descripteurs. La méthode "SURF" utilise le Fast-Hessian pour la détection des points d'intérêt et une approximation des ondelettes de Haar pour calculer les descripteurs.

Une quatrième méthode pour rechercher les points d'intérêt basée sur la méthode "FAST" (Features from Accelerated Segment Test) consiste à identifier les points d'intérêt potentiels puis analyser l'intensité des pixels situés autour desdits points d'intérêt. Cette méthode permet d'identifier les points d'intérêt très rapidement. Les descripteurs peuvent être identifiés via la méthode "BRIEF" (Binary Robust Indépendant Elementary Features).

La deuxième étape de la méthode de repositionnement de l'image consiste à comparer l'image primaire à l'image de référence en utilisant les points d'intérêt et leurs descripteurs. L'obtention du meilleur repositionnement est obtenue par recherche du meilleur alignement entre les descripteurs des deux images.

La valeur de repositionnement de l'image dépend des procédés de fabrication et en particulier de la précision du positionnement spatial de l'objet au moment de la prise d'image. Selon les cas de figure, l'image peut nécessiter un repositionnement selon un seul axe, selon deux axes perpendiculaires ou encore un repositionnement en rotation autour de l'axe perpendiculaire au plan formé par l'image.

Le repositionnement de l'image peut résulter de la combinaison de mouvements de translation et de rotation. La transformation homographique optimale est recherchée via la méthode des moindres carrés.

Pour l'opération de repositionnement de l'image on utilise les points d'intérêts et les descripteurs. Ces descripteurs peuvent être par exemple les caractéristiques des pixels ou les descripteurs "SIFT", "SURF", "BRIEF" à titre d'exemple. Les points d'intérêt et les descripteurs sont utilisés comme points de repère pour repositionner l'image.

Le repositionnement dans les méthodes SIFT, SURF et BRIEF se fait par la comparaison des descripteurs. Les descripteurs qui ne sont pas pertinents sont écartés en utilisant une méthode de consensus comme par exemple la méthode Ransac. Ensuite, la transformation homographique optimale est recherchée via la méthode des moindres carrés.

### Division de l'image primaire en images secondaires

La division de l'image primaire en P images secondaires peut être faite de plusieurs façons.

Un intérêt de l'invention est de permettre d'ajuster le niveau d'analyse visuelle à la zone observée de l'objet. Cet ajustement se fait dans un premier temps par le nombre d'image primaire et le niveau de résolution de chaque image primaire. La décomposition en images secondaires permet ensuite d'ajuster le niveau d'analyse localement dans chaque image primaire. Un premier paramètre sur lequel on peut intervenir, c'est la taille des images secondaires. Une image secondaire de plus petite taille permet d'affiner localement l'analyse. En ajustant conjointement la taille de chaque image secondaire S_{k,p} et le facteur de compression Q_{k,p}, l'invention permet d'optimiser le temps de calcul tout en gardant un niveau de détection performant et ajusté au niveau d'exigence liée au produit fabriqué. L'invention permet d'adapter localement le niveau de détection au niveau de criticité de la zone observée.

Un cas particulier de l'invention consiste à avoir toutes les images secondaires de taille identique.

Ainsi, quand toute la zone observée est de même importance, une première méthode consiste à diviser l'image primaire en P images secondaires de taille identique juxtaposées sans recouvrement.

Une deuxième méthode consiste à diviser l'image primaire en P images secondaires de taille identiques juxtaposées avec recouvrement. Le recouvrement est ajusté en fonction de la dimension des défauts susceptibles d'apparaitre sur l'objet.

Plus le défaut est de petite taille, plus le recouvrement peut être diminué. En général. On considère que le recouvrement est au moins égal à la demi-longueur caractéristique du défaut ; la longueur caractéristique étant définie comme le plus petit diamètre du cercle qui permet de contenir le défaut dans son intégralité.

Bien entendu, il est possible de combiner ces méthodes et utiliser des images secondaires qui sont juxtaposées et/ou avec recouvrement et/ou à une certaine distance les unes des autres.

### Calcul des Fonctions de compression-décompression

Selon une première méthode qui est aussi la méthode préférentielle, les fonctions de compression - décompression et les facteurs de compression sont déterminés à partir d'une analyse en composantes principales ("PCA" ou "Principal Component Analysis"). Cette méthode permet de définir les vecteurs et valeurs propres qui caractérisent le lot issu de la phase d'apprentissage. Dans la nouvelle base, les vecteurs propres sont classés par ordre d'importance. Le facteur de compression découle du nombre de dimension que l'on retient dans la nouvelle base. Plus le facteur de compression est élevé, plus le nombre de dimension de la nouvelle base est réduit. L'invention permet d'ajuster le facteur de compression en fonction du niveau de contrôle souhaité et en fonction du temps de calcul à disposition.

Un premier avantage de cette méthode, est lié au fait que la machine n'a pas besoin d'indication pour définir la nouvelle base. Le choix des vecteurs propres se fait automatiquement par calcul.

Un deuxième avantage de cette méthode est lié à la réduction du temps de calcul pour détecter les défauts en phase de production. Le nombre de données à traiter est diminué car le nombre de dimensions est réduit.

Un troisième avantage de la méthode résulte dans la possibilité d'attribuer un ou plusieurs scores en temps réel à l'image de l'objet en cours de production. Le ou les scores obtenus permet de quantifier un taux de déviation/erreur de l'objet en cours de fabrication par rapport aux objets de la phase d'apprentissage par le biais de sa reconstruction avec les modèles issus de la phase d'apprentissage.

Le facteur de compression est compris entre 5 et 500'000; et de préférence entre 100 et 10'000. Plus le facteur de compression est élevé, plus le temps de calcul sera court en phase de production pour analyser l'image. Cependant un facteur de compression trop élevé peut conduire à un modèle trop grossier et in fine inadapté pour détecter les erreurs.

Selon une deuxième méthode, le modèle est un auto-encodeur. L'auto-encodeur se présente sous la forme d'un réseau de neurone qui permet de définir les caractéristiques de façon non supervisée. L'auto-encodeur se compose de deux parties : un encodeur et un décodeur. L'encodeur permet de comprimer l'image secondaire S_{k,p}, et le décodeur permet d'obtenir l'image reconstruite R_{k,p}.

Selon la deuxième méthode on dispose d'un auto-encodeur par lot d'images secondaires. Chaque auto-encodeur a son propre facteur de compression.

Selon la deuxième méthode, les auto-encodeurs sont optimisés pendant la phase d'apprentissage. L'optimisation de l'auto-encodeur est obtenue en comparant les images reconstruites et les images initiales. Cette comparaison permet de quantifier les différences entre les images initiales et les images reconstruites et par conséquent de déterminer l'erreur commise par l'encodeur. La phase d'apprentissage permet d'optimiser l'auto-encodeur en minimisant l'erreur de reconstruction des images.

Selon une troisième méthode le modèle est basé sur l'algorithme "OMP" ou "Orthogonal Matching Pursuit". Cette méthode consiste à chercher la meilleure combinaison linéaire à partir de la projection orthogonale de quelques images sélectionnées dans une bibliothèque. Le modèle est obtenu par méthode itérative. A chaque ajout d'une image de la bibliothèque, l'image recomposée est améliorée.

Selon la troisième méthode, la bibliothèque d'image est définie par la phase d'apprentissage. Cette bibliothèque est obtenue par la sélection de quelques images représentatives de l'ensemble des images de la phase d'apprentissage.

### Calcul de l'image reconstruite à partir du modèle de compression décompression

En phase de production, chaque image primaire Aₖ de l'objet contrôlé est repositionnée en faisant appel aux procédés décrits ci-dessus puis divisée en Pₖ images secondaires S_{k,p}. Chaque image secondaire S_{k,p} fait l'objet d'une opération numérique de reconstruction avec son modèle défini lors de la phase d'apprentissage. A la fin de l'opération de reconstruction on dispose donc d'une image reconstruite R_{k,p} par image secondaire S_{k,p}.

L'opération de reconstruction de chaque image secondaire S_{k,p} avec un modèle F_{k,p} à facteur de compression Q_{k,p} permet d'avoir des temps de calcul très réduits. Le facteur de compression Q_{k,p} est compris entre 5 et 500'000 et préférablement entre 10 et 10'000.

Selon la méthode PCA qui est aussi la méthode préférentielle l'image secondaire S_{k,p} est préalablement transformée en vecteur. Ensuite, ce vecteur est projeté dans la base de vecteur propres grâce à la fonction F_{k,p} définie lors de l'apprentissage. On obtient alors l'image reconstruite R_{k,p} en transformant le vecteur obtenu en image

Selon la deuxième méthode, la recomposition de l'image secondaire est faite par l'auto-encodeur dont les paramètres ont été définis dans la phase d'apprentissage. L'image secondaire S_{k,p} est traitée par l'auto-encodeur afin d'obtenir l'image reconstruite R_{k,p}.

Selon la troisième méthode, l'image secondaire est reconstruite avec l'algorithme OMP ou Othogonal Matching Pursuit dont les paramètres ont été définis pendant la phase d'apprentissage.

### Calcul de l'erreur de reconstruction de chaque image secondaire

L'erreur de reconstruction est issue de la comparaison entre l'image secondaire S_{k,p} et l'image reconstruite R_{k,p}.

Une méthode utilisée pour calculer l'erreur consiste à mesurer la distance entre l'image secondaire S_{k,p} et l'image reconstruite R_{k,p}. La méthode préférentielle utilisée pour calculer l'erreur de reconstruction est la distance euclidienne ou norme 2. Cette méthode considère la racine carrée de la somme des carrés des erreurs.

Une méthode alternative pour calculer l'erreur consiste à utiliser la distance de Minkowsky la p-distance qui est une généralisation de la distance euclidienne. Cette méthode considère la racine p^{ème} de la somme des valeurs absolue des erreurs à la puissance p. Cette méthode permet d'accorder plus de poids aux écarts importants en choisissant p plus élevé que 2.

Une autre méthode alternative est la norme 3 ou méthode de Tchebichev. Cette méthode considère la valeur absolue maximale des erreurs.

### Calcul du ou des scores

La valeur du ou des scores de l'objet est obtenue à partir de l'erreur de reconstruction de chaque image secondaire.

Une méthode préférentielle consiste à attribuer au score la valeur maximale des erreurs de reconstruction.

Une méthode alternative consiste à calculer la valeur du score en faisant la moyenne des erreurs de reconstructions.

Une autre méthode alternative consiste à faire une moyenne pondérée des erreurs de reconstruction. La moyenne pondérée peut être utile lorsque la criticité des défauts n'est pas identique dans toutes les zones de l'objet.

Une autre méthode consiste à utiliser la distance euclidienne ou la norme 2.

Une autre méthode consiste à utiliser la p-distance.

Une autre méthode consiste à utiliser la distance de Tchebichev ou norme 3.

D'autres méthodes équivalentes sont bien entendu possibles dans le cadre de la présente invention.

Une fois que le ou les scores ont été calculés, leur valeurs sont utilisées pour déterminer si le produit considéré remplit les conditions de qualité souhaitées ou non. Si c'est le cas, il est maintenu dans la production, et si ce n'est pas le cas, il est marqué comme défectueux ou retiré de la production en fonction du stade de production atteint. Par exemple, si les produits sont individualisés, il peut être physiquement retiré du processus de fabrication. S'il n'est pas individualisé, il peut être marqué physiquement ou informatiquement pour être retiré ultérieurement.

Bien entendu le contrôle de qualité selon la présente demande peut être mis en oeuvre soit de façon unique dans le processus de fabrication (de préférence en fin de production), soit à plusieurs moments choisis de façon appropriée pour éviter la fabrication complète d'objets qui pourraient déjà considérés comme défectueux plus tôt dans le processus de fabrication, par exemple avant des étapes chronophages ou qui font appel à des moyens coûteux. En supprimant ces objets plus tôt dans le processus de fabrication, on peut optimiser ce dernier en termes de durée et de coût.

Les diverses méthodes peuvent être choisies de façon fixe dans un processus de fabrication complet de l'objet (c'est-à-dire que la même méthode est utilisée dans tout le processus de fabrication du produit) ou alors elles peuvent être combinées si plusieurs contrôles de qualité sont effectués de façon successive. On peut alors choisir la ou les méthodes les plus appropriées au contrôle à effectuer.

Dans la présente demande, il faut bien entendu comprendre que le procédé est mis en oeuvre dans une machine de production qui peut avoir une cadence élevée (p.ex. d'au moins 100 produits à la min). Si dans des exemples, le singulier a été utilisé pour définir un objet en production, cela a été fait pour des raisons de simplicité. En fait, le procédé s'applique à des objets successifs en production: le procédé est donc itératif et répétitif sur chaque objet en production successif et le contrôle de qualité s'effectue sur tous les objets successifs.

Les modes d'exécution décrits le sont à titre d'exemples illustratifs et ne doivent pas être considérés comme limitatifs. D'autres modes d'exécution peuvent faire appel à des moyens équivalents à ceux décrits par exemple. Les modes d'exécution peuvent également être combinés entre eux en fonction des circonstances, ou des moyens et/ou les étapes de procédé utilisés dans un mode d'exécution peuvent être utilisés dans un autre mode d'exécution de l'invention.

## Revendications

1. Procédé de fabrication d'objets, comme des tubes ou des emballages, comprenant au moins un contrôle de qualité intégré dans le procédé de fabrication effectué en cours de production et en continu,
ledit contrôle de qualité comprenant une phase d'apprentissage et une phase de production,
ladite phase d'apprentissage comprenant au moins les étapes suivantes:
-) production de N objets considérés comme étant acceptables;
-) prise d'au moins une image primaire (Aₖ) de référence de chacun des N objets;
-) division de chaque image primaire (Aₖ) de référence en (Pₖ) images secondaires (S_{k,p}) de référence;
-) regroupement des images secondaires de référence correspondantes en lots de N images;
-) détermination d'un modèle (F_{k,p}) de compression - décompression et avec un facteur de compression (Q_{k,p}) par lot
et ladite phase de production comprenant au moins les étapes suivantes:
-) prise d'au moins une image primaire d'au moins un objet en production;
-) division de chaque image primaire en images secondaires (S_{k,p});
-) application du modèle de compression - décompression et du facteur de compression définis lors de la phase d'apprentissage à chaque image secondaire (S_{k,p}) pour former une image secondaire reconstruite (R_{k,p});
-) calcul de l'erreur de reconstruction de chaque image secondaire reconstruite R_{k,p};
-) attribution d'un ou plusieurs scores par objet sur la base des erreurs de reconstruction;
-) détermination si l'objet produit passe avec succès le contrôle de qualité ou non sur la base du ou des scores attribués.

2. Procédé selon la revendication 1, dans lequel on effectue une analyse multiple sur une au moins des images primaires initialement prises, ladite analyse multiple donnant lieu à des images primaires "filles" qui sont utilisées à la place de l'image initialement prise à leur origine.

3. Procédé selon la revendication 1 ou 2, dans lequel après l'étape de prise d'au moins une image primaire, on effectue un repositionnement de chaque image primaire.

4. Procédé selon l'une des revendications précédentes, dans lequel chaque image primaire est traitée
et le traitement utilise un filtre, et/ou la détection de contours, et/ou l'application de masques pour cacher certaines zones de l'image.

5. Procédé selon l'une des revendications précédentes, dans lequel le facteur de compression est compris entre 5 et 500'000, de préférence entre 100 et 10'000.

6. Procédé selon l'une des revendications précédentes, dans lequel la fonction de compression - décompression est déterminée à partir d'une analyse en composantes principales ("PCA").

7. Procédé selon l'une des revendications précédentes, dans lequel la fonction de compression - décompression est déterminée par l'algorithme dit "OMP" (Orthogonal Matching pursuit).

8. Procédé selon l'une des revendications précédentes, dans lequel l'erreur de reconstruction est calculée par la distance euclidienne et/ou la distance de Minkovsky et/ou la méthode de Tchebichev.

9. Procédé selon l'une des revendications précédentes, dans lequel le score correspond à la valeur maximale des erreurs de reconstruction et/ou à la moyenne des erreurs de reconstruction et/ou à la moyenne pondérée des erreurs de reconstruction et/ou à la distance euclidienne et/ou la p-distance et/ou la distance de Tchebichev.

10. Procédé selon l'une des revendications précédentes, dans lequel N est égal à au moins 10.

11. Procédé selon l'une des revendications précédentes, dans lequel on prend au moins deux images primaires, les images primaires étant de taille identique ou de taille différente.

12. Procédé selon l'une des revendications précédentes, dans lequel la division de chaque image primaire se fait en P images secondaires de taille identique ou de taille différente.

13. Procédé selon l'une des revendications précédentes, dans lequel les images secondaires S sont juxtaposées avec recouvrement et/ou sans recouvrement.

14. Procédé selon l'une des revendications précédentes, dans lequel les images secondaires sont de taille identique ou de taille différente.

15. Procédé selon l'une des revendications précédentes, ledit contrôle de qualité intégré étant effectué au moins une fois dans ledit procédé de fabrication.

16. Procédé selon l'une des revendications précédentes, dans lequel la phase d'apprentissage est itérative et répétée en cours de production avec des objets en production afin de tenir compte d'une différence qui n'est pas considérée comme un défaut.

17. Procédé selon l'une des revendications précédentes, dans lequel le repositionnement consiste à considérer un nombre prédéterminé de points d'intérêt et de descripteurs répartis sur l'image et à déterminer le déplacement relatif entre l'image de référence et l'image primaire qui minimise l'erreur de superposition au niveau des points d'intérêt et les points d'intérêt sont répartis de manière aléatoire dans l'image ou dans une zone prédéfinie de l'image.

18. Procédé selon la revendication 17, dans lequel la position des points d'intérêt est prédéfinie, arbitrairement ou non.

19. Procédé selon l'une des revendications 17 ou 18, dans lequel les points d'intérêt sont détectés par l'une des méthodes dites "SIFT", ou "SURF", ou "FAST", ou "ORB" ; et les descripteurs sont définis par l'une des méthodes "SIFT", ou "SURF", ou "BRIEF", ou "ORB".

20. Procédé selon l'une des revendications 17 à 19, dans lequel l'image est repositionnée selon au moins un axe et/ou l'image est repositionnée en rotation autour de l'axe perpendiculaire au plan formé par l'image et/ou l'image est repositionnée par la combinaison d'un mouvement de translation et de rotation.

## Patentansprüche

1. Verfahren zur Herstellung von Gegenständen, wie Rohre oder Verpackungen, das mindestens eine in das Herstellungsverfahren integrierte Qualitätskontrolle enthält, die während der Herstellung und fortlaufend ausgeführt wird,
wobei die Qualitätskontrolle eine Lernphase und eine Produktionsphase enthält,
wobei die Lernphase mindestens die folgenden Schritte enthält:
-) Herstellung von N Gegenständen, die als akzeptabel angesehen werden;
-) Aufnahme mindestens eines Bezugs-Primärbilds (Aₖ) jedes der N Gegenstände;
-) Aufteilung jedes Bezugs-Primärbilds (Aₖ) in (Pₖ) Bezugs-Sekundärbilder (S_{k,p});
-) Zusammenfassung der entsprechenden Bezugs-Sekundärbilder in Chargen von N Bildern;
-) Bestimmung eines Komprimierung-Dekomprimierung-Modells (F_{k,p}) und mit einem Komprimierungsfaktor (Q_{k,p}) pro Charge,
und die Produktionsphase mindestens die folgenden Schritte enthält:
-) Aufnahme mindestens eines Primärbilds mindestens eines in Produktion befindlichen Gegenstands;
-) Aufteilung jedes Primärbilds in Sekundärbilder (S_{k,p});
-) Anwendung des Komprimierung-Dekomprimierung-Modells und des Komprimierungsfaktors, die in der Lernphase definiert werden, an jedes Sekundärbild (S_{k,p}), um ein rekonstruiertes Sekundärbild (R_{k,p}) zu bilden;
-) Berechnung des Rekonstruktionsfehlers jedes rekonstruierten Sekundärbilds (R_{k,p});
-) Zuweisung eines oder mehrerer Scores pro Gegenstand auf der Basis der Rekonstruktionsfehler;
-) Bestimmung, auf der Basis des oder der zugewiesenen Score(s), ob der produzierte Gegenstand die Qualitätskontrolle erfolgreich besteht oder nicht.

2. Verfahren nach Anspruch 1, wobei eine Mehrfachanalyse an mindestens einem der anfänglich aufgenommenen Primärbilder ausgeführt wird, wobei die Mehrfachanalyse zu "Tochter"-Primärbildern führt, die anstelle des anfänglich aufgenommenen Bilds an ihrem Ursprung verwendet werden.

3. Verfahren nach Anspruch 1 oder 2, wobei nach dem Schritt der Aufnahme mindestens eines Primärbilds eine Neupositionierung jedes Primärbilds ausgeführt wird.

4. Verfahren nach einem der vorhergehenden Ansprüche, wobei jedes Primärbild verarbeitet wird und die Verarbeitung ein Filter und/oder die Erkennung von Umrissen und/oder die Anwendung von Masken zum Abdecken bestimmter Bereiche des Bilds verwendet.

5. Verfahren nach einem der vorhergehenden Ansprüche, wobei der Komprimierungsfaktor zwischen 5 und 500'000, vorzugsweise zwischen 100 und 10'000 liegt.

6. Verfahren nach einem der vorhergehenden Ansprüche, wobei die Funktion der Komprimierung-Dekomprimierung ausgehend von einer Analyse in Hauptkomponenten ("PCA") bestimmt wird.

7. Verfahren nach einem der vorhergehenden Ansprüche, wobei die Funktion der Komprimierung-Dekomprimierung durch den "OMP" (Orthogonal Matching Pursuit) genannten Algorithmus bestimmt wird.

8. Verfahren nach einem der vorhergehenden Ansprüche, wobei der Rekonstruktionsfehler durch den euklidischen Abstand und/oder den Minkovski-Abstand und/oder die Tschebyscheff-Methode berechnet wird.

9. Verfahren nach einem der vorhergehenden Ansprüche, wobei der Score dem maximalen Wert der Rekonstruktionsfehler und/oder dem Mittelwert der Rekonstruktionsfehler und/oder dem gewichteten Mittelwert der Rekonstruktionsfehler und/oder dem euklidischen Abstand und/oder dem p-Abstand und/oder dem Tschebyscheff-Abstand entspricht.

10. Verfahren nach einem der vorhergehenden Ansprüche, wobei N gleich mindestens 10 ist.

11. Verfahren nach einem der vorhergehenden Ansprüche, wobei mindestens zwei Primärbilder aufgenommen werden, wobei die Primärbilder eine gleiche Größe oder eine unterschiedliche Größe haben.

12. Verfahren nach einem der vorhergehenden Ansprüche, wobei die Aufteilung jedes Primärbilds in P Sekundärbilder gleicher Größe oder unterschiedlicher Größe erfolgt.

13. Verfahren nach einem der vorhergehenden Ansprüche, wobei die Sekundärbilder S mit Überlappung und/oder ohne Überlappung nebeneinander angeordnet werden.

14. Verfahren nach einem der vorhergehenden Ansprüche, wobei die Sekundärbilder eine gleiche Größe oder eine unterschiedliche Größe haben.

15. Verfahren nach einem der vorhergehenden Ansprüche, wobei die integrierte Qualitätskontrolle mindestens einmal im Herstellungsverfahren ausgeführt wird.

16. Verfahren nach einem der vorhergehenden Ansprüche, wobei die Lernphase iterativ ist und im Laufe der Produktion mit in Produktion befindlichen Gegenständen wiederholt wird, um eine Differenz zu berücksichtigen, die nicht als ein Fehler angesehen wird.

17. Verfahren nach einem der vorhergehenden Ansprüche, wobei die Neupositionierung darin besteht, eine vorbestimmte Anzahl von auf dem Bild verteilten interessierenden Punkten und Deskriptoren in Betracht zu ziehen und die relative Verschiebung zwischen dem Bezugsbild und dem Primärbild zu bestimmen, die den Überlagerungsfehler im Bereich der interessierenden Punkte minimiert, und die interessierenden Punkte zufällig im Bild oder in einem vordefinierten Bereich des Bilds verteilt sind.

18. Verfahren nach Anspruch 17, wobei die Position der interessierenden Punkte willkürlich oder nicht vorab definiert wird.

19. Verfahren nach einem der Ansprüche 17 oder 18, wobei die interessierenden Punkte von einer der "SIFT" oder "SURF" oder "FAST" oder "ORB" genannten Methoden erkannt werden; und die Deskriptoren von einer der Methoden "SIFT" oder "SURF" oder "BRIEF" oder "ORB" definiert werden.

20. Verfahren nach einem der Ansprüche 17 bis 19, wobei das Bild gemäß mindestens einer Achse neu positioniert wird und/oder das Bild in Drehung um die Achse lotrecht zur vom Bild gebildeten Ebene neu positioniert wird und/oder das Bild durch die Kombination einer Translations- und einer Rotationsbewegung neu positioniert wird.

## Claims

1. Process for manufacturing objects, such as tubes or packaging, comprising at least one quality inspection integrated into the manufacturing process, performed during production and continuously,
said quality inspection comprising a learning phase and a production phase,
said learning phase comprising at least the following steps:
-) producing N objects considered to be acceptable;
-) taking at least one reference primary image (Aₖ) of each of the N objects;
-) dividing each reference primary image (Aₖ) into (Pₖ) reference secondary images (S_{k,p});
-) grouping the corresponding reference secondary images into batches of N images;
-) determining a compression - decompression model (F_{k,p}) with a compression factor (Q_{k,p}) per batch and said production phase comprising at least the following steps:
-) taking at least one primary image of at least one object in production;
-) dividing each primary image into secondary images (S_{k,p});
-) applying the compression - decompression model and the compression factor defined in the learning phase to each secondary image (S_{k,p}) so as to form a reconstructed secondary image (R_{k,p});
-) computing the reconstruction error of each reconstructed secondary image R_{k,p};
-) assigning one or more scores per object based on the reconstruction errors;
-) determining whether or not the produced object successfully passes the quality inspection based on the one or more assigned scores.

2. Process according to Claim 1, wherein multiple analysis is performed on at least one of the primary images initially taken, said multiple analysis giving rise to "daughter" primary images that are used in place of the initially taken image from which they originate.

3. Process according to Claim 1 or 2, wherein, after the step of taking at least one primary image, each primary image is repositioned.

4. Process according to one of the preceding claims, wherein each primary image is processed and the processing operation uses a filter, and/or edge detection, and/or the application of masks in order to hide certain areas of the image.

5. Process according to one of the preceding claims, wherein the compression factor is between 5 and 500 000, preferably between 100 and 10 000.

6. Process according to one of the preceding claims, wherein the compression - decompression function is determined from a principal component analysis ("PCA").

7. Process according to one of the preceding claims, wherein the compression - decompression function is determined by the algorithm called the "OMP" (Orthogonal Matching Pursuit) algorithm.

8. Process according to one of the preceding claims, wherein the reconstruction error is computed using the Euclidean distance and/or the Minkowski distance and/or the Chebyshev method.

9. Process according to one of the preceding claims, wherein the score corresponds to the maximum value of the reconstruction errors and/or to the average of the reconstruction errors and/or to the weighted average of the reconstruction errors and/or to the Euclidean distance and/or the p-distance and/or the Chebyshev distance.

10. Process according to one of the preceding claims, wherein N is equal to at least 10.

11. Process according to one of the preceding claims, wherein at least two primary images are taken, the primary images being of identical size or of different size.

12. Process according to one of the preceding claims, wherein each primary image is divided into P secondary images of identical size or of different size.

13. Process according to one of the preceding claims, wherein the secondary images S are juxtaposed with overlap and/or without overlap.

14. Process according to one of the preceding claims, wherein the secondary images are of identical size or of different size.

15. Process according to one of the preceding claims, said integrated quality inspection being performed at least once in said manufacturing process.

16. Process according to one of the preceding claims, wherein the learning phase is iterative and repeated during production with objects in production in order to take into account a difference that is not considered to be a defect.

17. Process according to one of the preceding claims, wherein the repositioning consists in considering a predetermined number of points of interest and descriptors distributed over the image and in determining the relative displacement between the reference image and the primary image that minimizes the overlay error at points of interest and the points of interest are distributed randomly in the image or in a predefined area of the image.

18. Process according to Claim 17, wherein the position of the points of interest is arbitrarily or non-arbitrarily predefined.

19. Process according to either of Claims 17 and 18, wherein the points of interest are detected using one of the methods known as "SIFT", or "SURF", or "FAST", or "ORB"; and the descriptors are defined by one of the methods "SIFT", or "SURF", or "BRIEF", or "ORB".

20. Process according to one of Claims 17 to 19, wherein the image is repositioned along at least one axis and/or the image is repositioned in rotation about the axis perpendicular to the plane formed by the image and/or the image is repositioned by combining a translational and rotational movement.
